# EUROPEAN PATENT APPLICATION

(11) **EP 3 009 668 A1**
(43) Date of publication of application: **20.04.2016**
(21) Application number: 15190446.3
(22) Date of filing: 19.10.2015
(51) Int. Cl.: F03D 1/00, F16C 3/02, B23P 6/00, B23P 15/00

(54) **METHOD FOR MACHINING A SHAFT AND APPARATUS MADE THEREBY**

(30) Priority: 17.10.2014 US 201414516832
(71) Applicant: General Electric Company, Schenectady, NY 12345 (US)
(72) Inventor: HOLLOWAY, Brent, Greenville, SC South Carolina 29615-4614 (US); DIMASCIO, Paul Stephen, Greenville, SC South Carolina 29615 (US); JUTTON, Stephen John, Greenville, SC South Carolina 29615-4614 (US)
(74) Representative: Bedford, Grant Richard

(57) **Abstract**

A method for machining a shaft 428 includes the step of machining a compound radius into the shaft at a junction between a radial surface 402 of the shaft and an axial facing flange portion 404 of the shaft. The compound radius has a curved surface 410 with at least two different radii 413,417. The curved surface extends circumferentially around the shaft.

## Description

The invention described herein relates generally to a method for machining a shaft and a shaft made thereby. More specifically, the invention relates to a method for machining a compound radius into the shaft and a shaft having a compound radius.

Wind power is considered one of the cleanest and most environmentally friendly energy sources presently available, and wind turbines have gained increased attention in this regard. A modem wind turbine typically includes a tower, generator, gearbox, nacelle, and one more rotor blades. The rotor blades capture kinetic energy from wind using known foil principles, and transmit the kinetic energy through rotational energy to turn a shaft that is coupled to the gearbox, or if a gearbox is not used, directly to the generator. The generator then converts the mechanical energy to electrical energy that may be supplied to a utility grid.

Modem wind turbines can be quite large, with many designs having a rotor hub height exceeding 100 meters. In this regard, the individual components are also quite large and heavy. A main shaft in a wind turbine must support the weight of the rotor as well as the various wind imposed loads. The main shaft may be 3 meters long and weigh 2 tons or more, and are typically designed for a lifespan of 20 years. Large (and heavy) parts are typically expensive to make, ship and install. As turbines age, they may be refurbished (and returned to use) or retired. Obviously, it would be more desirable from both an economic and environmental view to refurbish (and reuse) as many parts as possible to reduce waste. However, current practice has worn or damaged parts discarded, and this makes the cost of refurbishment increase as additional new parts are required to bring the wind turbine back to the operational specifications.

In an aspect of the present invention, a method for machining a shaft includes the step of machining a compound radius into the shaft at a junction between a radial surface of the shaft and an axial facing flange portion of the shaft. The compound radius has a curved surface with at least two different radii. The curved surface extends circumferentially around the shaft.

In an aspect of the present invention, a method for machining a shaft includes the steps of inspecting and machining. The inspecting step inspects the shaft for the presence of defects, and is performed by at least one of, visual inspection, magnetic particle inspection, dimensional inspection, or penetrant inspection. The machining step machines a compound radius into the shaft at a junction between a radial surface of the shaft and an axial facing flange portion of the shaft. The compound radius comprises a curved surface having at least two different radii and the curved surface extends circumferentially around the shaft. The shaft is a main shaft configured for use with a dynamoelectric machine.

In another aspect of the present invention, an apparatus for a dynamoelectric machine includes a shaft having a compound radius at a junction between a radial surface of the shaft and an axial facing flange portion of the shaft. The compound radius comprises a curved surface having at least two different radii and the curved surface extends circumferentially around the shaft.
FIG. 1 illustrates a perspective view of an exemplary wind turbine.
FIG. 2 illustrates a partially cut-away perspective view of a portion of the wind turbine of FIG. 1.
FIG. 3 illustrates a cross-sectional view of a shaft.
FIG. 4 illustrates a partial, cross-sectional view of the stepped region of the shaft with a stress relief repair, according to an aspect of the present invention.
FIG. 5 illustrates a partial, cross-sectional view of the stepped region of the shaft with a stress relief repair, according to an aspect of the present invention.
FIG. 6 is a flowchart of a method for machining a shaft, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a", "an", and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

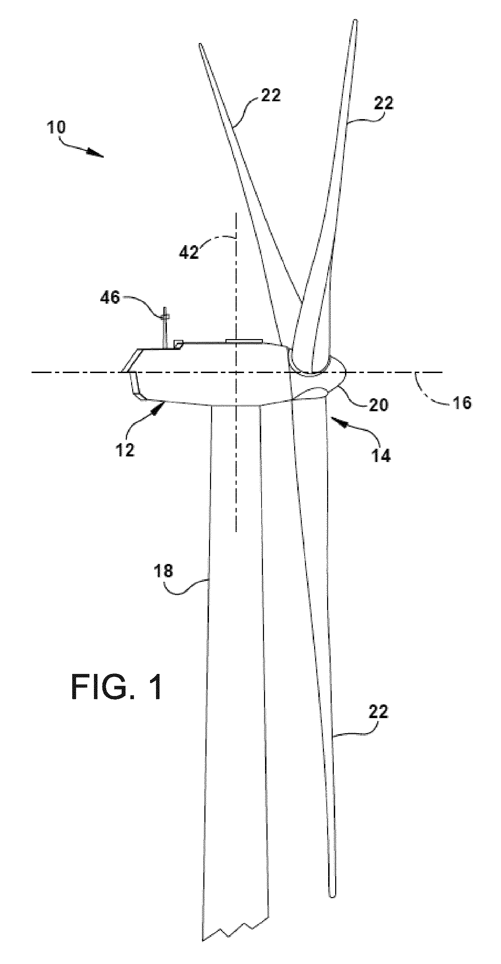

FIG. 1 is a perspective view of an exemplary wind turbine 10. Wind turbine 10 is a wind generator for generating electrical power from wind energy. In some known wind turbines, wind turbine 10 is any type of wind turbine, such as, but not limited to, a windmill (not shown). Moreover, wind turbine 10 includes a horizontal-axis configuration. In some known wind turbines, wind turbine 10 may include a vertical-axis configuration (not shown). Wind turbine 10 may be coupled to an electrical load (not shown), such as, but not limited to, a power grid (not shown), and may receive electrical power therefrom to drive operation of wind turbine 10 and/or its associated components and/or may supply electrical power generated by wind turbine 10.

Wind turbine 10 includes a nacelle 12, and a rotor (generally designated by 14) coupled to nacelle 12 for rotation with respect to nacelle 12 about an axis of rotation 16. In the exemplary embodiment, nacelle 12 is mounted on a tower 18. The height of tower 18 is any suitable height enabling wind turbine 10 to function as described herein. Rotor 14 includes a hub 20 and a plurality of blades 22 (sometimes referred to as "airfoils") extending radially outwardly from hub 20 for converting wind energy into rotational energy. Although rotor 14 is described and illustrated herein as having three blades 22, rotor 14 may include any number of blades 22.

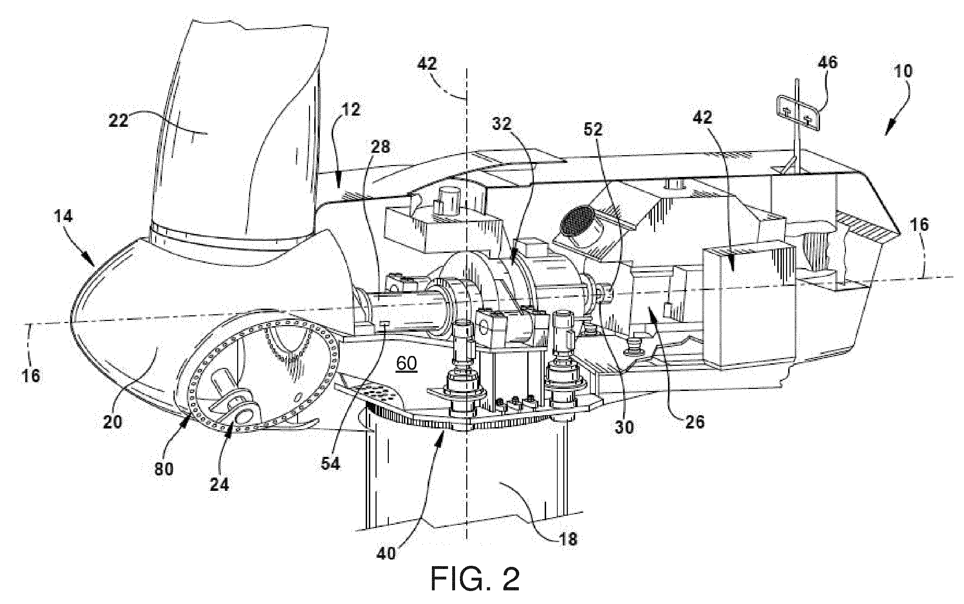

FIG. 2 is a partially cut-away perspective view of a portion of the wind turbine 10. Wind turbine 10 includes an electrical generator 26 coupled to rotor 14 for generating electrical power from the rotational energy generated by rotor 14. Generator 26 is any suitable type of electrical generator, such as, but not limited to, a wound rotor induction or permanent magnet generator. Rotor 14 includes a low speed rotor shaft 28 coupled to rotor hub 20 for rotation therewith. Generator 26 is coupled to a high speed rotor shaft 30 such that rotation of rotor shaft 28 drives rotation of the generator rotor, and therefore operation of generator 26. In the exemplary embodiment, high speed rotor shaft 30 is coupled to low speed shaft 28 through a gearbox 32, although in other embodiments generator rotor shaft 30 is coupled directly to rotor shaft 28. The rotation of rotor 14 drives the generator rotor to thereby generate variable frequency AC electrical power from rotation of rotor 14.

In some embodiments, wind turbine 10 includes a brake system (not shown) for braking rotation of rotor 14. Furthermore, in some embodiments, wind turbine 10 includes a yaw system 40 for rotating nacelle 12 about an axis of rotation 42 to change a yaw of rotor 14. Yaw system 40 is coupled to and controlled by a control system(s) 44. In some embodiments, wind turbine 10 includes anemometry 46 for measuring wind speed and/or wind direction. Anemometry 46 is coupled to control system(s) 44 for sending measurements to control system(s) 44 for processing thereof. In the exemplary embodiment, control system(s) 44 is mounted within nacelle 12. Alternatively, one or more control systems 44 may be remote from nacelle 12 and/or other components of wind turbine 10. Control system(s) 44 may be used for, but is not limited to, overall system monitoring and control including, for example, pitch and speed regulation, high-speed shaft and yaw brake application, yaw and pump motor application, and/or fault monitoring. Alternative distributed or centralized control architectures may be used in some embodiments.

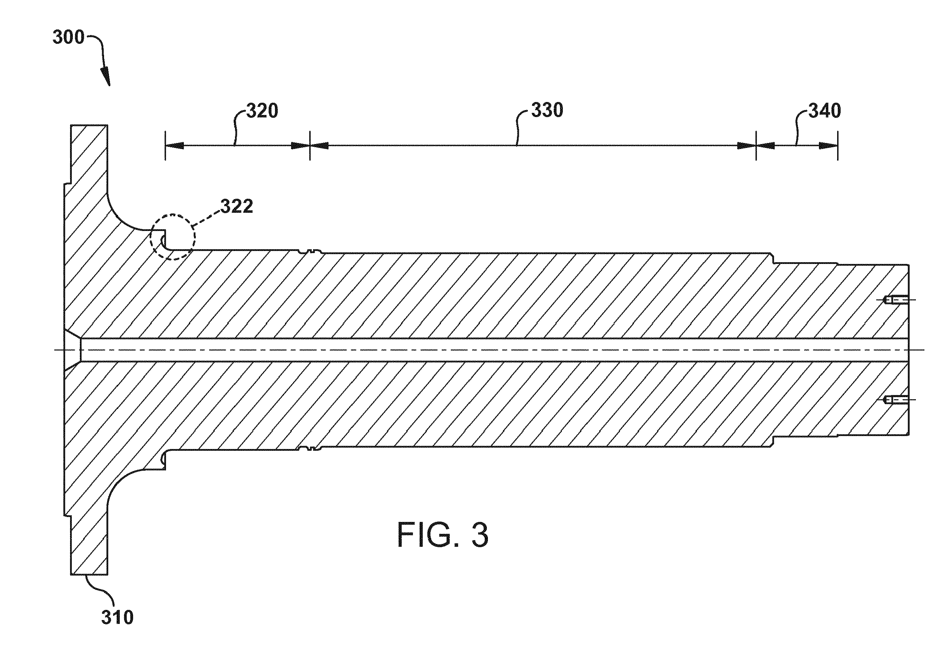

FIG. 3 illustrates a cross-sectional view of a shaft 300. The shaft 300 may be a main shaft configured for use in a wind turbine, such as shaft 28 as shown in FIG. 2. The shaft 300 includes a rotor flange 310 for mounting to the hub 20. A main bearing journal 320 is a portion of the shaft 300 that rests on the main bearing (not shown). The main bearing is mounted on the main frame or bed plate 60. A central portion 330 of the shaft lies between the main bearing journal 320 and the shrink disc mating end journal 340. The end journal 340 (i.e., a rear portion of shaft 300) may rest on a second bearing (not shown) or it may be coupled directly to the gearbox 32. The journal regions 320 and 340 of shaft 300 experience a large amount of wear and tear during the lifespan of a wind turbine. One area that is particularly susceptible to damage due to wear is the stepped region indicated by 322. The stepped region 322 is the area between the main bearing journal and the beginning of the flange 310, and it usually has the geometry of a right angle that extends circumferentially around the entire shaft. After an extended period of use (e.g., about 20 years), the stepped region suffer from stress cracks.

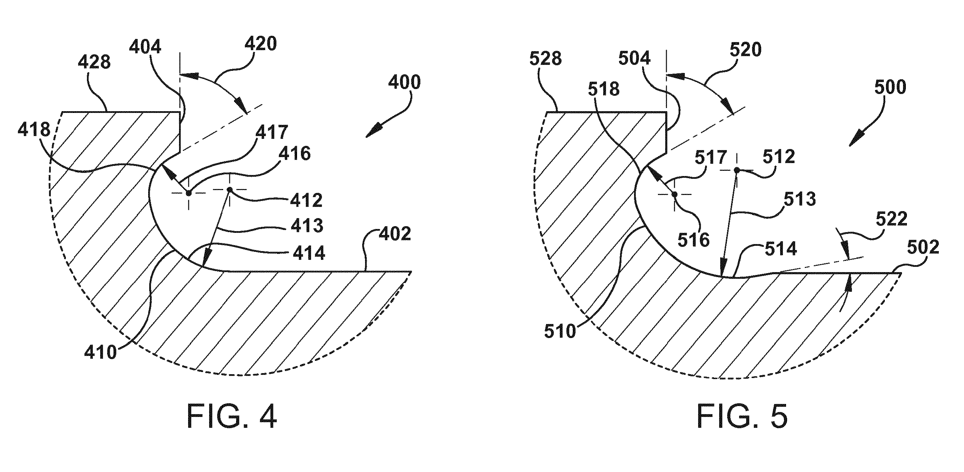

FIG. 4 illustrates a partial, cross-sectional view of the stepped region 322 with a stress relief repair 400, according to an aspect of the present invention. Before the repair, the junction between the radial surface 402 and the axial facing flange portion 404 was a right angle. The machined and/or repaired region of the shaft consists of a compound radius that has been machined into the shaft 428. The repair 400 is located at a junction between the radial surface 402 of the shaft and the axial facing flange portion 404 of the shaft. The compound radius forms a curved surface 410 that has at least two different radii, and the curved surface 410 extends circumferentially around the shaft 428. As examples only, the shaft 428 may be similar to shaft 28 of FIG. 2 or shaft 300 of FIG. 3, and the shaft 428 may be a new or used main shaft configured for use with a wind turbine. Alternatively, the shaft 428 may be a rotor that is configured for use with a generator, motor, compressor or turbine.

The compound radius has a first radius 413 with an origin 412 and first curved surface 414. A second radius 417 has an origin 416 and a second curved surface 418. The first curved surface 414 blends (or transitions) smoothly with the second curved surface 418, and both curved surfaces 414, 418 form the curved surface 410. The first curved surface 414 extends parallel (or co-linear) with the radial surface 402, and the second curved surface forms an angle with the axial facing flange portion 404. For example, the angle 420 may be between about 50 to 70 degrees or about 60 degrees. The first radius 413 may be about 30mm to about 50mm and the second radius 417 may be about 10mm to about 20mm. As one specific example, the first radius 413 may be about 40mm and the second radius 417 may be about 15mm. However, any suitable radius length may be used as desired in the specific application.

The origin 412 of the first radius 413 may located about 12% of a shaft radius radially outward from the radial surface 402 of the shaft, and about 8% of a shaft radius axially inward from the axial facing flange portion 404 of the shaft. The origin 416 of the second radius may be located about 10% of a shaft radius radially outward from the radial surface 402 of the shaft, and about 1% of a shaft radius axially inward from the axial facing flange portion 404 of the shaft. For example, if the central portion 330 of the shaft is about 600mm in diameter that would equal a 300mm radius. The first origin 412 would be located about 38mm radially outward from the radial surface 402 and about 26mm axially inward from axial surface 404, and the second origin 416 would be located about 29mm radially outward from the radial surface 402 and about 3mm axially inward from axial surface 404. Of course, any specific spatial locations may be used for the two origins as long as they result in a smooth curved surface 410 having the desired stress relief characteristics.

FIG. 5 illustrates a partial, cross-sectional view of the stepped region 322 with a stress relief repair 500, according to an aspect of the present invention. The machined and/or repaired region of the shaft 528 consists of a compound radius that has been machined into the shaft 528. The repair 500 is located at a junction between the radial surface 502 of the shaft and the axial facing flange portion 504 of the shaft. The compound radius forms a curved surface 510 that has at least two different radii, and the curved surface 510 extends circumferentially around the shaft 528.

The compound radius has a first radius 513 with an origin 512, which form a first curved surface 514. A second radius 517 has an origin 516, which form a second curved surface 518. The first curved surface 514 blends (or transitions) smoothly with the second curved surface 518, and both curved surfaces 514, 518 form the curved surface 510. The first curved surface 514 forms an angle 522 with the radial surface 502, and this angle may be between about 5 degrees and about 15 degrees. The second curved surface 518 forms an angle with the axial facing flange portion 504. For example, the angle 520 may be between about 50 to 70 degrees or about 60 degrees. The first radius 513 may be about 30mm to about 50mm and the second radius 517 may be about 10mm to about 20mm. As one specific example, the first radius 513 may be about 40mm and the second radius 517 may be about 15mm.

The origin 512 of the first radius 513 may located about 12% of a shaft radius radially outward from the radial surface 502 of the shaft, and about 8% of a shaft radius axially inward from the axial facing flange portion 504 of the shaft. The origin 516 of the second radius may be located about 10% of a shaft radius radially outward from the radial surface 502 of the shaft, and about 1% of a shaft radius axially inward from the axial facing flange portion 504 of the shaft. For example, if the central portion 330 of the shaft is about 600mm in diameter that would equal a 300mm radius. The first origin 512 would be located about 38mm radially outward from the radial surface 502 and about 26mm axially inward from axial surface 504, and the second origin 516 would be located about 29mm radially outward from the radial surface 502 and about 3mm axially inward from axial surface 504. Of course, any specific spatial locations may be used for the two origins as long as they result in a smooth curved surface 510 having the desired stress relief characteristics.

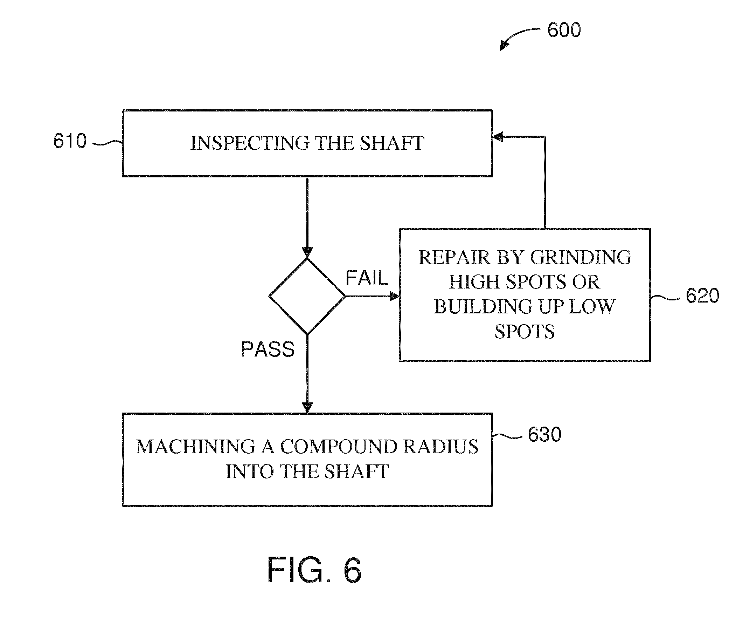

FIG. 6 is a flowchart of a method 600 for machining a shaft, according to an aspect of the present invention. The method includes the steps of inspecting 610 the shaft for any defects or damage, repairing 620 the shaft by grinding high spots or building up low spots, and machining 630 a compound radius into the shaft at the desired location. The inspecting step 610 may include visual inspection, magnetic particle inspection, dimensional inspection, penetrant inspection and any other suitable inspection method. Magnetic particle inspection is a non-destructive testing (NDT) process for detecting surface and slightly subsurface discontinuities in ferromagnetic materials. The presence of a surface or subsurface discontinuity in the material allows the magnetic flux to leak, since air cannot support as much magnetic field per unit volume as metals. Ferrous iron particles may then be applied to the part, and if an area of flux leakage is present, the particles will be attracted to this area. The particles will build up at the area of leakage and form what is known as an indication, and this indication can then be evaluated to determine what it is, what may have caused it, and what action should be taken, if any. A fluorescent penetrant test may also be performed and is a type of dye penetrant inspection in which a fluorescent dye is applied to the surface of the shaft in order to detect defects that may compromise the integrity or quality of the shaft. A dimensional inspection may be performed to verify that shaft dimensions are within specific operational tolerances. A visual inspection may be used to identify areas in need of repair or maintenance, and a magnification lens (e.g., 10x magnification) may be employed to more closely examine specific areas. If desired, a general cleaning of the shaft may be performed prior to the inspection process to remove any materials that may hinder the inspection process (e.g., paint, scale, rust, oil, grease, etc.).

A dimensional inspection may indicate that the shaft is either too high or too low in specific regions. If results are unsatisfactory, and the measured region is too high, then the shaft can be grinded to remove the high spots. For example, a lathe, file, hone or grinder can be used to machine down the high spots until they are back within tolerance levels. Likewise, if the dimensional inspection is unsatisfactory by indicating some regions are too low, then these regions can be built back up by adding material. For example, laser welding, plating or high velocity oxygen fuel (HVOF) spraying, or any other suitable material adding process may be used to add material to the shaft to bring the low spots back within tolerance levels. After the repair step 620 of either grinding high spots and/or building up low spots is complete, the shaft may be re-inspected to verify dimensional specifications. If the shaft passes inspection, then the shaft can move to the machining step 630.

In the machining step 630, a compound radius is machined into the shaft at the desired location. One area of the shaft benefiting from such a feature is the main bearing journal. In this region the compound radius is machined into the shaft at a junction between the radial surface of the shaft and an axial facing flange portion of the shaft, or the region indicated by 322 in FIG. 3. The compound radius forms a curved surface that extends circumferentially around the shaft, and the compound radius is a curved surface having at last two different radii to facilitate stress relief. As an example only, a first radius may have a radius of about 30mm to about 50mm that results in a first circumferentially curved surface, and a second radius may have a radius of about 10mm to about 20mm that results in a second circumferentially curved surface. The first circumferentially curved surface transitions smoothly into the second circumferentially curved surface so that both form a circumferentially curved surface having multiple radii, as illustrated in FIGs. 4 and 5. As one specific example, the first radius may be about 40mm and the second radius may be about 15mm. Additionally, an origin of the first radius may be located about 12% of a shaft radius radially outward from the radial surface of the shaft, and about 8% of a shaft radius axially inward from the axial facing flange portion of the shaft, and an origin of the second radius may be located about 10% of a shaft radius radially outward from the radial surface of the shaft, and about 1% of a shaft radius axially inward from the axial facing flange portion of the shaft. The first radius may be machined so that a first angle exists between the curved surface and the radial surface of the shaft, and the first angle is between about 5 degrees and 15 degrees. Alternatively, two surfaces may have a junction where the first angle may be 0 (or 180) degrees. The second radius may be machined so that a second angle exists between the curved surface and the axial facing flange portion of the shaft, and the second angle may be between about 50 degrees and 70 degrees. Both the first and second angles facilitate the stress relieving properties of the compound radius curved surface.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for machining a shaft, the method comprising the step of:
   machining a compound radius into the shaft at a junction between a radial surface of the shaft and an axial facing flange portion of the shaft; and
   wherein the compound radius comprises a curved surface having at least two different radii and the curved surface extends circumferentially around the shaft.
2. The method of clause, wherein the shaft is a main shaft configured for use with a dynamoelectric machine.
3. The method of clause 1 or clause 2, further comprising:
   inspecting the shaft for the presence of defects.
4. The method of any preceding clause, wherein the inspecting step further comprises:
   inspecting the shaft by at least one of: visual inspection, magnetic particle inspection, dimensional inspection, and penetrant inspection.
5. The method of any preceding clause, wherein the dimensional inspection is performed and if results of the dimensional inspection are unsatisfactory performing at least one of:
   grinding to remove high spots;
   building up a surface, to remove low spots, of the shaft by laser welding, plating or high velocity oxygen fuel (HVOF) spraying.
6. The method of any preceding clause, wherein the machining step further comprises:
   machining a first radius, the first radius having a radius of about 30mm to about 50mm; and
   machining a second radius, the second radius having a radius of about 10mm to about 20mm.
7. The method of any preceding clause, wherein the first radius is machined so that a first angle exists between the curved surface and the radial surface of the shaft, and the first angle is between about 5 degrees and 15 degrees.
8. The method of any preceding clause, wherein the second radius is machined so that a second angle exists between the curved surface and the axial facing flange portion of the shaft, and the second angle is between about 50 degrees and 70 degrees.
9. The method of any preceding clause, wherein an origin of the first radius is located about 12% of a shaft radius radially outward from the radial surface of the shaft, and about 8% of a shaft radius axially inward from the axial facing flange portion of the shaft, and an origin of the second radius is located about 10% of a shaft radius radially outward from the radial surface of the shaft, and about 1% of a shaft radius axially inward from the axial facing flange portion of the shaft.
10. The method of any preceding clause, wherein the machining step further comprises:
   machining a first radius, the first radius having a radius of about 40mm; and
   machining a second radius, the second radius having a radius of about 15mm.
11. A method for machining a shaft, the method comprising the step of:
   inspecting the shaft for the presence of defects, the inspecting is performed by at least one of, visual inspection, magnetic particle inspection, dimensional inspection, or penetrant inspection;
   machining a compound radius into the shaft at a junction between a radial surface of the shaft and an axial facing flange portion of the shaft; and
   wherein the compound radius comprises a curved surface having at least two different radii and the curved surface extends circumferentially around the shaft, and wherein the shaft is a main shaft configured for use with a dynamoelectric machine.
12. The method of any preceding clause, wherein the machining step further comprises:
   machining a first radius, the first radius having a radius of about 30mm to about 50mm; and
   machining a second radius, the second radius having a radius of about 10mm to about 20mm; and
   wherein the first radius is machined so that a first angle exists between the curved surface and the radial surface of the shaft, and the first angle is between about 5 degrees and 15 degrees; and the second radius is machined so that a second angle exists between the curved surface and the axial facing flange portion of the shaft, and the second angle is between about 50 degrees and 70 degrees.
13. The method of any preceding clause, wherein an origin of the first radius is located about 12% of a shaft radius radially outward from the radial surface of the shaft, and about 8% of a shaft radius axially inward from the axial facing flange portion of the shaft, and an origin of the second radius is located about 10% of a shaft radius radially outward from the radial surface of the shaft, and about 1% of a shaft radius axially inward from the axial facing flange portion of the shaft.
14. An apparatus for a dynamoelectric machine, the apparatus comprising:
   a shaft having a compound radius at a junction between a radial surface of the shaft and an axial facing flange portion of the shaft; and
   wherein the compound radius comprises a curved surface having at least two different radii and the curved surface extends circumferentially around the shaft.
15. The apparatus of any preceding clause, wherein the shaft is at least one of:
   a main shaft configured for use with a wind turbine; or
   a rotor configured for use with a generator, motor, compressor or turbine.
16. The apparatus of any preceding clause, the compound radius further comprising:
   a first radius having a radius of about 30mm to about 50mm; and
   a second radius having a radius of about 10mm to about 20mm.
17. The apparatus of any preceding clause, wherein the first radius has a radius of about 40mm, and
   the second radius has a radius of about 15mm.
18. The apparatus of any preceding clause, wherein the first radius is located so that a first angle exists between the curved surface and the radial surface of the shaft, and the first angle is between about 5 degrees and 15 degrees.
19. The apparatus of any preceding clause, wherein the second radius is located so that a second angle exists between the curved surface and the axial facing flange portion of the shaft, and the second angle is between about 50 degrees and 70 degrees.
20. The apparatus of any preceding clause, wherein an origin of the first radius is located about 12% of a shaft radius radially outward from the radial surface of the shaft, and about 8% of a shaft radius axially inward from the axial facing flange portion of the shaft, and an origin of the second radius is located about 10% of a shaft radius radially outward from the radial surface of the shaft, and about 1% of a shaft radius axially inward from the axial facing flange portion of the shaft.

## Claims

1. A method for machining a shaft (428), the method comprising the step of:
machining a compound radius into the shaft at a junction between a radial surface (402) of the shaft and an axial facing flange portion (404) of the shaft; and
wherein the compound radius comprises a curved surface having at least two different radii (413,417) and the curved surface extends circumferentially around the shaft.

2. The method of claim 1, wherein the shaft is a main shaft configured for use with a dynamoelectric machine.

3. The method of claim 1 or claim 2, further comprising:
inspecting the shaft for the presence of defects.

4. The method of any preceding claim, wherein the inspecting step further comprises:
inspecting the shaft by at least one of: visual inspection, magnetic particle inspection, dimensional inspection, and penetrant inspection.

5. The method of any preceding claim, wherein the dimensional inspection is performed and if results of the dimensional inspection are unsatisfactory performing at least one of:
grinding to remove high spots;
building up a surface, to remove low spots, of the shaft by laser welding, plating or high velocity oxygen fuel (HVOF) spraying.

6. The method of any preceding claim, wherein the machining step further comprises:
machining a first radius, the first radius having a radius of about 30mm to about 50mm; and
machining a second radius, the second radius having a radius of about 10mm to about 20mm.

7. The method of any preceding claim, wherein the first radius is machined so that a first angle exists between the curved surface and the radial surface of the shaft, and the first angle is between about 5 degrees and 15 degrees.

8. The method of any preceding claim, wherein the second radius is machined so that a second angle exists between the curved surface and the axial facing flange portion of the shaft, and the second angle is between about 50 degrees and 70 degrees.

9. The method of any preceding claim, wherein an origin of the first radius is located about 12% of a shaft radius radially outward from the radial surface of the shaft, and about 8% of a shaft radius axially inward from the axial facing flange portion of the shaft, and an origin of the second radius is located about 10% of a shaft radius radially outward from the radial surface of the shaft, and about 1% of a shaft radius axially inward from the axial facing flange portion of the shaft.

10. The method of any preceding claim, wherein the machining step further comprises:
machining a first radius, the first radius having a radius of about 40mm; and
machining a second radius, the second radius having a radius of about 15mm.

11. A method for machining a shaft, the method comprising the step of:
inspecting the shaft for the presence of defects, the inspecting is performed by at least one of, visual inspection, magnetic particle inspection, dimensional inspection, or penetrant inspection;
machining a compound radius into the shaft at a junction between a radial surface of the shaft and an axial facing flange portion of the shaft; and
wherein the compound radius comprises a curved surface having at least two different radii and the curved surface extends circumferentially around the shaft, and wherein the shaft is a main shaft configured for use with a dynamoelectric machine.

12. The method of claim 11, wherein the machining step further comprises:
machining a first radius, the first radius having a radius of about 30mm to about 50mm; and
machining a second radius, the second radius having a radius of about 10mm to about 20mm; and
wherein the first radius is machined so that a first angle exists between the curved surface and the radial surface of the shaft, and the first angle is between about 5 degrees and 15 degrees; and the second radius is machined so that a second angle exists between the curved surface and the axial facing flange portion of the shaft, and the second angle is between about 50 degrees and 70 degrees.

13. The method of claim 12, wherein an origin of the first radius is located about 12% of a shaft radius radially outward from the radial surface of the shaft, and about 8% of a shaft radius axially inward from the axial facing flange portion of the shaft, and an origin of the second radius is located about 10% of a shaft radius radially outward from the radial surface of the shaft, and about 1% of a shaft radius axially inward from the axial facing flange portion of the shaft.

14. An apparatus for a dynamoelectric machine, the apparatus comprising:
a shaft (428) having a compound radius at a junction between a radial surface (402) of the shaft and an axial facing flange portion (404) of the shaft; and
wherein the compound radius comprises a curved surface (410) having at least two different radii (413,417) and the curved surface extends circumferentially around the shaft.

15. The apparatus of claim 14, wherein the shaft is at least one of:
a main shaft configured for use with a wind turbine; or
a rotor configured for use with a generator, motor, compressor or turbine.
